# EUROPÄISCHE PATENTANMELDUNG

(11) **EP 2 136 037 A2**
(43) Veröffentlichungstag der Anmeldung: **23.12.2009**
(21) Anmeldenummer: 08011260.0
(22) Anmeldetag: 20.06.2008
(51) Int. Cl.: F01K 7/02

(54) **Verfahren und Vorrichtung zum Betreiben einer Dampfkraftwerksanlage mit Dampfturbine und Prozessdampfverbraucher**

(71) Anmelder: SIEMENS AKTIENGESELLSCHAFT, 80333 München (DE)
(72) Erfinder: Beul, Ulrich, 45149 Essen (DE); Glos, Stefan, Dr., 45657 Recklinghausen (DE); Heue, Matthias, 44879 Bochum (DE); Hofbauer, Thomas, Dr., 45478 Muelheim (DE); Hoffacker, Ralf, 47800 Krefeld (DE); Lückemeyer, Nils, 45277 Essen (DE); Pieper, Norbert, 47178 Duisburg (DE); Sievert, Roland, Dr., 45147 Essen (DE)

(57) **Zusammenfassung**

Die Erfindung betrifft ein Verfahren zum Betreiben einer Dampfkraftwerksanlage 1 mit wenigstens einer Dampfturbine 2 und einem Prozessdampfverbraucher 3, bei dem ein Dampfmassenstrom 4 in einen ersten Teilmassenstrom 5 und einen zweiten Teilmassenstrom 6 aufgeteilt wird. Hierbei wird in einem ersten Betriebszustand 7 der erste Teilmassenstrom 5 der Dampfturbine 2 und der zweite Teilmassenstrom 6 dem Prozessdampfverbraucher 3 zugeführt. In einem zweiten Betriebszustand 8 wird zumindest ein Teil des zweiten Teilmassenstroms 6 der Dampfturbine 2 nach wenigstens der ersten Turbinenstufe 9 zugeführt. Die Erfindung betrifft außerdem eine Dampfkraftwerksanlage 1 an der das erfindungsgemäße Verfahren ausführbar ist.

## Beschreibung

Die Erfindung betrifft ein Verfahren zum Betreiben einer Dampfkraftwerksanlage und insbesondere ein Verfahren zum Betreiben einer Dampfkraftwerksanlage bei unterschiedlichen Betriebszuständen. Die Erfindung betrifft außerdem eine Dampfkraftwerksanlage mit einer Dampfturbine und einem Prozessdampfverbraucher, an der das erfindungsgemäße Verfahren ausführbar ist.

Solche Dampfkraftwerksanlagen (DKW), insbesondere Dampfkraftwerksanlagen zur Erzeugung elektrischer Energie, umfassen in der Regel eine Dampfturbine und einen befeuerten Kessel oder als Gas- und Dampfturbinenkraftwerksanlage (GuD) eine Gasturbine mit nachgeschaltetem Abhitzedampferzeuger und Dampfturbine.

Bei Kraftwerksanlagen mit fossiler Befeuerung entsteht durch die Verbrennung eines fossilen Brennstoffes ein kohlendioxidhaltiges Abgas. Dieses Abgas wird in der Regel in die Atmosphäre entlassen. Das sich in der Atmosphäre ansammelnde Kohlendioxid behindert die Wärmeabstrahlung unserer Erde und führt dabei durch den so genannten Treibhauseffekt zu einer Erhöhung der Erdoberflächentemperatur. Um eine Reduzierung der Kohlendioxid-Emission bei fossilbefeuerten Kraftwerksanlagen zu erreichen, kann Kohlendioxid aus dem Abgas abgetrennt werden.

Zur Abtrennung von Kohlendioxid aus einem Gasgemisch sind allgemein verschiedene Methoden bekannt. Ein bekanntes Verfahren ist die Abtrennung von Kohlendioxid aus einem Abgas nach einem Verbrennungsprozess (post-combustion CO₂ capture - Postcap). Bei diesem Verfahren wird das Kohlendioxid in einem Absorptions-Desorptions-Prozess mit einem Waschmittel abgetrennt.

In einem klassischen Absorptions-Desorptions-Prozess wird dabei das Abgas in einer Absorptionskolonne mit einem selektiven Lösungsmittel als Waschmittel in Kontakt gebracht. Dabei erfolgt die Aufnahme von Kohlendioxid durch einen chemischen oder physikalischen Prozess. Das gereinigte Abgas wird für eine weitere Verarbeitung oder Austragung aus der Absorptionskolonne ausgelassen. Das mit Kohlendioxid beladene Lösungsmittel wird zur Abtrennung des Kohlendioxids und Regenerierung des Lösungsmittels in eine Desorptionskolonne geleitet. Die Abtrennung in der Desorptionskolonne kann thermisch erfolgen. Dabei wird aus dem beladenen Lösungsmittel ein Gas-Dampfgemisch aus gasförmigem Kohlendioxid und verdampften Lösungsmittel ausgetrieben. Das verdampfte Lösungsmittel wird anschließend von dem gasförmigen Kohlendioxid separiert. Das Kohlendioxid kann nun in mehreren Stufen verdichtet und gekühlt werden. In flüssigem oder gefrorenem Zustand kann das Kohlendioxid dann einer Lagerung oder Verwertung zugeführt werden. Das regenerierte Lösungsmittel wird erneut zur Absorberkolonne geleitet, wo es wieder Kohlendioxid aus dem kohlendioxidhaltigen Abgas aufnehmen kann.

Zum Austreiben des Kohlendioxids aus dem beladenen Lösungsmittel wird eine Wärmeleistung auf einem Temperaturniveau von ca. 120 bis 150°C benötigt. Diese Wärmeleistung kann durch Dampf bereit gestellt werden, der aus der Dampfturbinenanlage entnommen wird. Nach dem Durchlauf der Desorptionskolonne kondensierte der Dampf und wird wieder dem Dampfkreislauf zurück geführt.

Eine Dampfturbinenanlage besteht in der Regel aus einem Hoch- , einem Mittel- und einem Niederdruckteil. Ein in den Hochdruckteil eingeleiteter Dampf wird stufenweise über den Mittel- und den anschließenden Niederdruckteil entspannt. Zwischen dem Hoch- und dem Mitteldruckteil findet regelmäßig eine Zwischenüberhitzung statt. Die Abgrenzung von Mittel- und Niederdruckteil kennzeichnet sich in der Regel durch eine Dampfentnahmemöglichkeit an der Überströmleitung zwischen Mittel- und Niederdruckteil.

Die Entnahme von Dampf aus der Überströmleitung zum Zwecke der CO2-Abscheidung ist vergleichbar mit einer Prozessdampfauskopplung, wie sie zum Beispiel zur Fernwärmeversorgung üblich ist. Die Menge an entnommenem Dampf ist dabei abhängig von der Betriebsweise des Prozessdampfverbrauchers oder der Abscheidevorrichtung und kann dabei durchaus von 0% bis 65% variieren. Die entnommene Dampfmenge führt zu einer Reduzierung des Dampfmassenstroms, welcher der nachfolgenden Turbinenstufe zugeführt wird.

Als Folge der Dampfentnahme wird nun in gleichem Maße der Dampfdruck an der Entnahmestelle absinken. Mit dem Dampfdruck sinkt auch die Kondensationstemperatur bei der Wärmeabgabe. Da jeder Wärmeverbraucher ein definiertes Temperaturniveau benötigt, darf der Dampfdruck an der Entnahmestelle den dazugehörigen Sattdampfdruck nicht unterschreiten. So wird beispielsweise zur Fernwärmeversorgung mit einer Vorlauftemperatur von 130°C ein Prozessdampf auf einem Druckniveau von mindestens 2,7 bar benötigt.

Um diesem Problem zu begegnen, ist es aus dem Stand der Technik bekannt, eine Drosselvorrichtung vor die Niederdruckturbine zu schalten. Damit ist es möglich, den Druck entsprechend der Temperaturanforderung eines entsprechenden Wärmeverbrauchers einzustellen. Der Nachteil besteht allerdings darin, dass die Drosselung des verbleibenden Dampfes thermodynamisch zu einem hohen Verlust führt.

Alternativ kann die Niederdruckturbine auch für einen Betrieb mit Dampfentnahme vor Turbineneintritt angepasst sein. Dazu werden entweder von vornherein oder nachträglich Modifikationen an der Niederdruckturbine vorgenommen, durch welche die Niederdruckturbine bei gleichem Vordruck auf einen geringeren Dampfmassenstrom angepasst wird. Eine nachträgliche Modifikation kann zum Beispiel bei nachträglicher Installation einer Kohlendioxid-Abscheidevorrichtung in die Kraftwerksanlage erfolgen. Bekannte Verfahren zu Anpassung der Niederdruckturbine auf die geringeren Massenströme sind der Austausch einer oder mehrerer Schaufelreihen zur Verringerung der Schluckfähigkeit. Nachteilig an diesem Verfahren ist, dass bei Ausfall oder gewünschtem Abschalten des Prozessdampfverbrauchers oder der Kohlendioxid-Abscheidevorrichtung der in diesem Betriebsfall anfallende überschüssige Dampf zumindest teilweise in den Kondensator abgeleitet werden muss, da sonst der Druck und die Temperatur vor der Niederdruckturbine unzulässig ansteigt. Alternativ könnte die Niederdruckturbine und der Abdampfbereich der Mitteldruckturbine von vornherein für die höheren Drücke und Temperaturen ausgelegt werden, was jedoch zu deutlichen Mehrkosten führen kann.

Genereller Nachteil an Dampfkraftwerksanlagen mit Prozessdampfverbrauchern die aus dem Stand der Technik bekannt sind, sind entweder die für den Betrieb mit Dampfauskopplung erforderliche verlustbehaftete Drosselung oder der Verlust von überschüssigem Dampf, der im Betriebszustands ohne Dampfauskopplung anfällt, und ungenutzt in den Kondensator geleitet werden muss. Diese Verluste führen zu einer unerwünschten Verschlechterung des Gesamtwirkungsgrades der Dampfkraftwerksanlage. Die Wirtschaftlichkeit einer solchen Dampfkraftwerksanlage mit Prozessdampfauskopplung ist daher deutlich geringer.

Eine Aufgabe der Erfindung besteht darin, ein Verfahren zum Betreiben einer Dampfkraftwerksanlage mit wenigstens einer Dampfturbine und einem Prozessdampfverbraucher vorzuschlagen, bei dem in allen Betriebszuständen ein effizienter Betrieb unter Verwertung des verfügbaren Dampfes unter verbesserter Ausnutzung des verfügbaren Dampfes gewährleistet ist. Eine weitere Aufgabe der Erfindung ist es, eine Dampfkraftwerksanlage mit wenigstens einer Dampfturbine und einem Prozessdampfverbraucher vorzuschlagen, die in allen Betriebszuständen einen effizienten Betrieb unter verbesserter Ausnutzung des verfügbaren Dampfes gewährleistet.

Die auf ein Verfahren gerichtete Aufgabe ist erfindungsgemäß gelöst mit einem Verfahren zum Betreiben einer Dampfkraftwerksanlage mit wenigstens einer Dampfturbine und einem Prozessdampfverbraucher, bei dem ein Dampfmassenstroms in einen ersten Teilmassenstrom und einen zweiten Teilmassenstrom aufgeteilt wird, wobei in einem ersten Betriebszustand der erste Teilmassenstrom der Dampfturbine und der zweite Teilmassenstrom dem Prozessdampfverbraucher zugeführt wird, und wobei in einem zweiten Betriebszustand zumindest ein Teil des zweiten Teilmassenstroms der Dampfturbine nach wenigstens der ersten Turbinenstufe zugeführt wird.

Die Erfindung geht dabei von der Überlegung aus, dass die Dampfkraftwerksanlage für den Betrieb mit einem Prozessdampfverbraucher ausgelegt ist, und somit der in die Dampfturbine einbringbare Dampfmassenstrom dem ersten Teilmassenstrom angepasst ist. Angepasst heißt, dass die Dampfturbine durch den ersten Teilmassenstrom unter Volllast bzw. bei Nennbetriebszahl läuft.

Die Dampfkraftwerksanlage ist darüber hinaus für mehrere Betriebszustände betreibbar. In einem ersten Betriebszustand ist der Prozessdampfverbraucher in Betrieb und bekommt den zweiten Teilmassenstrom zugeführt. Der erste Teilmassenstrom wird der Dampfturbine zugeführt. Kommt es nun in einem zweiten Betriebszustand zur Abschaltung oder Teilbetrieb des Prozessdampfverbrauchers, fällt der zweite Teilmassenstrom vollständig oder teilweise als Überschussdampf an. Zumindest ein Teil des Überschussdampfes wird nun der Dampfturbine nach wenigstens der ersten Turbinenstufe zugeführt. Dazu wird zumindest eine Turbinenstufe umgangen. Durch die Einleitung des zweiten Teilmassenstroms nach der ersten Turbinenstufe wird der einbringbare Dampfmassenstrom der Dampfturbine erhöht, so dass bei nahezu gleichbleibendem Dampfdruck vor der Dampfturbine ein höherer Dampfmassenstrom durchsetzbar wird.

Die Abschaltung oder ein Teilbetrieb des Prozessdampfverbrauchers im zweiten Betriebszustand kann dabei durch Ausfall oder durch gewolltes Abschalten oder gewollten Teilbetrieb erfolgen. Auch bei abgeschaltetem Prozessdampfverbraucher kann es erforderlich sein, dass ein Teil des zweiten Teilmassenstroms für einen Stand-by-Betrieb benötigt wird und nur ein Teil des zweiten Teilmassenstroms als Überschussdampf anfällt. Ein Vorteil des Betriebsverfahrens ist insbesondere, dass auf einen plötzlich anfallenden Überschussdampf sehr schnell reagiert, und dieser in der Dampfturbine nutzbar gemacht werden kann.

Durch das vorgeschlagene Betriebsverfahren ist es möglich, einer für einen Teilmassenstrom ausgelegte Dampfturbine mit einem angeschlossenen Prozessdampfverbraucher einen erhöhten Dampfmassenstrom zuzuführen, so dass ein Druckanstieg des Dampfes vor der Dampfturbine vermieden wird, und somit die Dampfturbine nicht für höhere Drücke ausgelegt werden muss. Ebenso kann eine Drosselung bei voller Last oder ein ungenutztes Ableiten des Überschussdampfes in den Kondensator vermieden werden.

Das Verfahren zum Betreiben einer Dampfkraftwerksanlage ermöglicht somit einen wesentlichen effizienteren Betrieb durch einen erhöhten Gesamtwirkungsgrad der Kraftwerksanlage. Dies wird dadurch erreicht, dass Überschussdampf in der Dampfturbine verwertet werden kann und keine Verluste durch Drosslung des ersten Teilmassenstroms entstehen. Die Erfindung ermöglicht zudem die nachträgliche Installation eines Prozessdampfverbrauchers unter Erfüllung ökonomischer Bedingungen.

In einer vorteilhaften Weiterbildung des Betriebsverfahrens, wird im zweiten Betriebszustand zumindet ein Teil des zweiten Teilmassenstroms in eine oder mehrere Anzapfleitungen geleitet. Ein Teil des zweiten Teilmassenstroms wir nun dafür verwendet, den an die Anzapfleitungen angeschlossenen Vorwärmer zu speisen, ein anderer Teil strömt in die Dampfturbine und mischt sich an der entsprechenden Anzapfstelle mit dem Hauptmassenstrom und nimmt nun an der weiteren Expansion teil.

In Abhängigkeit vom Betriebszustand ist es ebenso von Vorteil, den zweiten Teilmassenstrom der Dampfturbine nach wenigstens der ersten Turbinenstufe komplett zuzuführen. Dieses Betriebsverfahren wird im zweiten Betriebszustand durchgeführt. Der zweite Teilmassenstrom, der als Überschussdampf anfällt, wird dabei vollständig der Dampfturbine zugeführt. Auf eine Aufteilung des zweiten Teilmassenstroms, zum Beispiel für einen Stand-by-Betrieb wird verzichtet. Dadurch wird der gesamte Überschussdampf in der Dampfturbine verwertet.

Um eine weitgehend vollständige Unterbringung des Überschussdampfes in der Dampfturbine zu erreichen, ist es vorteilhaft, den zweite Teilmassenstrom der Dampfturbine bei mehreren Turbinenstufen zuzuführen. Dies ist möglich, da in Strömungsrichtung der Dampfturbine bei jeder Turbinenstufe auch eine Entspannung des Dampfes erfolgt, und somit wieder Dampfmassenstrom einbringbar wird. Im Betriebsverfahren wird der zweite Teilmassenstrom dabei in mehrere Teilströme aufgeteilt und jeder Teilstrom als Überschussdampf der Dampfturbine bei einer anderen Turbinenstufe zugeführt. Beispielsweise wird in die zweite Turbinenstufe soviel Überschussdampf eingebracht, wie der zweiten Turbinenstufe zuführbar ist. Der Überschussdampf, der nicht in die zweite Turbinenstufe einbringbar war, wird dann der dritten Turbinenstufe zugeführt. Wird die Menge an einbringbarem Überschussdampf auch in der dritten Turbinenstufe erreicht, wird der darüber hinaus vorhandene Überschussdampf der vierten Turbinenstufe zugeführt, usw.. Die weitgehend vollständige Unterbringung des Überschussdampfes in die Dampfturbine bewirkt eine Leistungssteigerung der Dampfturbine und führt zu einer Erhöhung des Wirkungsgrades.

In einer besonderen Ausgestaltung des Betriebsverfahrens, wird der Dampfturbine eine weitere Dampfturbine vorgeschaltet, wobei die weitere Dampfturbine bei einer ersten Druckstufe betrieben wird und die Dampfturbine bei einer zweiten Druckstufe betrieben wird, und wobei die erste Druckstufe höher eingestellt wird als die zweite Druckstufe. Die Dampfturbine mit der zweiten Druckstufe wird als Niederdruckturbine betrieben, und ist einer Mitteldruckturbine nachgeschaltet. Die Dampfentnahme für den Prozessdampfverbraucher erfolgt zwischen der Mitteldruck- und der Niederdruckturbine. Die Entnahmestelle richtet sich dabei nach den erforderlichen Dampfparametern, die der Prozessdampfverbraucher fordert. Demnach ist auch eine Anordnung denkbar, bei der die Dampfentnahme an einer anderen Stelle erfolgt. So kann zum Beispiel auch bei einer Hoch-, Mittel- und Niederdruckturbinenanordnung die Dampfentnahme zwischen der Hoch- und Mitteldruckturbine erfolgen.

Vorteilhafterweise erfolgt die Zuführung des zweiten Teilmassenstroms in die Dampfturbine bei einer Turbinenstufe an der ein gewünschtes Verhältnis zwischen zustellbarem Dampfmassenstrom und Leistungssteigerung der Dampfturbine berücksichtigt wird. Mit jeder Turbinenstufe in Strömungsrichtung der Dampfturbine erfolgt eine Entspannung des Dampfes und ist mehr Dampfmassenstrom durchsetzbar. Allerdings sinkt auch mit jeder weiteren Turbinenstufe die durch den eingebrachten Dampfmassenstrom erzielbare Leistung. Beispielsweise wird ein in die Dampfturbine einzubringenden Dampfmassenstrom, der etwa 100% dem Dampfmassenstrom vor der ersten Turbinenstufe entspricht, bei etwa der dritten Turbinenstufe weitgehend zustellbar.

In einer vorteilhaften Weiterbildung des Betriebsverfahrens wird das Verhältnis der Aufteilung des Dampfmassenstroms in den ersten Teilmassenstrom und den zweiten Teilmassenstrom in Abhängigkeit des Betriebszustands geregelt. Für den Regelprozess sind entsprechende Mess- und Regelsysteme vorgesehen. Durch eine an den Betriebszustand angepasste Regelung ist eine schnelle Reaktion auf Veränderungen der Betriebsweise des Prozessdampfverbrauchers möglich. Dadurch kann zum Beispiel bei Ausfall des Prozessdampfverbrauchers der im zweiten Betriebszustand als Überschussdampf anfallende zweite Teilmassenstrom ohne große Verluste in der Dampfturbine nutzbar gemacht werden.

Vorteilhaft ist auch, dass durch das Betriebsverfahren der erste Teilmassenstrom in beiden Betriebszuständen im Wesentlichen konstant gehalten wird. Somit kann der Dampfdruck vor der ersten Turbinenstufe der Dampfturbine nahezu auf gleichem Niveau gehalten werden, wodurch die Dampfturbine auf den ersten Teilmassenstrom angepasst und auf eine Drosseldung verzichtet werden kann.

Besonders von Vorteil ist das vorgeschlagene Betriebsverfahren wenn der Prozessdampfverbraucher eine Kohlendioxid-Abscheidevorrichtung ist. Im ersten Betriebszustand wird der zweite Teilmassenstroms dazu zur Unterstützung eines Desorptionsprozesses verwendet. Die Nachrüstung bereits bestehender Kraftwerksanlagen ist dabei bei voller Last ohne den Einsatzeiner Drosselvorrichtung realisierbar.

Die auf eine Dampfkraftwerksanlage gerichtete Aufgabe der Erfindung wird gelöst durch eine Dampfkraftwerksanlage mit einer Dampfturbine und einem Prozessdampfverbraucher, wobei die Dampfturbine eine erste Druckstufe und eine zweiten Druckstufe aufweist, wobei eine Dampfleitung, die mit der ersten Druckstufe verbunden ist, in eine Prozessdampfleitung und eine Überströmleitung aufzweigt, und dass die Prozessdampfleitung mit dem Prozessdampfverbraucher verbunden ist und die Überströmleitung mit der zweiten Druckstufe verbunden ist, wobei eine Bypassleitung vorgesehen ist, welche die Überströmleitung mit der zweiten Druckstufe nach wenigstens der ersten Turbinenstufe verbindet, und dass Dampf an wenigstens der ersten Turbinenstufe der zweiten Druckstufe vorbeiführbar ist.

Die Erfindung geht dabei von der Überlegung aus, dass die Dampfkraftwerksanlage für den Betrieb mit einem Prozessdampfverbraucher ausgelegt ist, und somit die Schluckfähigkeit der Dampfturbine auf einen reduzierten Dampfmassenstrom angepasst ist. Ferner ist eine Bypassleitung vorgesehen, die die Überströmleitung mit der zweiten Druckstufe der Dampfturbine nach wenigstens der ersten Turbinenstufe verbindet. Dadurch ist im Betrieb der Dampfkraftwerksanlage Dampf an wenigstens der ersten Turbinenstufe der zweiten Druckstufe vorbeifürbar. Die Überströmleitung ermöglicht, den Dampfdruck vor der ersten Turbinenstufe nahezu konstant einzustellen, wodurch eine Anpassung der zweiten Druckstufe an einen reduzierten Dampfmassenstrom möglich ist, und bei voller Last auf einen Einsatz einer Drosselvorrichtung verzichtet werden kann. Die Einleitung eines Überschussdampfes durch die Bypassleitung in die zweite Druckstufe nach wenigstens der ersten Turbinenstufe erhöht zudem die Leistung der Dampfturbine und macht die Einleitung des Überschussdampfes in einen Kondensator überflüssig.

Die vorgeschlagene Dampfkraftwerksanlage ist durch einen höheren Wirkungsgrad wesentlichen effizienter im Betrieb. Die Wirkungsgraderhöhung wird erreicht durch die Verwertung des Überschussdampfes in der Dampfturbine. Da bei voller Last kein Einsatz einer Drosselklappe notwendig ist, entstehen keine Verluste durch Drosslung des Dampfmassenstroms. Die Erfindung ermöglicht zudem die nachträgliche Installation eines Prozessdampfverbrauchers unter Erfüllung ökonomischer Bedingungen.

In einer vorteilhaften Weiterbildung der Dampfkraftwerksanlage sind mehrere Bypassleitungen vorgesehen, welche die Überströmleitung mit der zweiten Druckstufe nach wenigstens der ersten Turbinenstufe mit unterschiedlichen Turbinenstufen verbinden, so dass Dampf an wenigstens der ersten Turbinenstufe vorbeifürbar ist und an mehreren Turbinenstufen einleitbar ist. Dazu zweigt die Bypassleitung in mehrere Teilleitung auf, die jeweils mit unterschiedlichen Turbinenstufen der Dampfturbine verbunden sind.

Bei einer vorteilhaften Ausgestaltung der Dampfkraftwerksanlage ist die zweite Druckstufe für einen niedrigeren Druck ausgelegt, als die erste Druckstufe. Die zweite Druckstufe ist eine Dampfturbine für Niederdruck. Demnach ist die erste Druckstufe eine Dampfturbine für Mitteldruck, die einer Hochdruckdampfturbine nachgeschaltet ist. Die Anordnung der Abzweigung der Bypassleitung richtet sich nach den erforderlichen Dampfparametern, die der Prozessdampfverbraucher fordert. Ist beispielsweise der Prozessdampfverbraucher eine Abscheidevorrichtung für Kohlendioxid, sind die Dampfparameter zwischen Mittel- und Niederdruckturbine für eine Dampfentnahme geeignet. Die Bypassleitung zweigt daher von der Überströmleitung zwischen der Mittel- und Niederdruckturbine ab. Es ist auch eine Anordnung denkbar, bei der die Dampfentnahme an einer anderen Stelle erfolgt. So kann zum Beispiel auch bei einer Hoch-, Mittel- und Niederdruckturbinenanordnung die Dampfentnahme zwischen der Hoch- und Mitteldruckturbine erfolgen, so dass die erste Druckstufe die Hochdruckturbine und die zweite Druckstufe die Mitteldruckturbine ist.

Von Vorteil ist auch die Schaltung eines Regelventils in die Prozessdampfleitung, so dass in Abhängigkeit vom Betriebsfall des Prozessdampfverbrauchers die Menge eines dem Prozessdampfverbraucher zugeführten Dampfmassenstroms regelbar ist. Ein dem Prozessdampfverbraucher nicht zugeführter Prozessdampf fällt dabei als Überschussdampf an. Ebenso vorteilhaft ist die Verschaltung eines Regelventils in die Bypassleitung, so dass in Abhängigkeit vom Betriebsfall des Prozessdampfverbrauchers ein Überschussdampf in die zweite Druckstufe nach wenigstens der ersten Turbinenstufe geregelt einleitbar ist. Dadurch ist der der ersten Turbinenstufe der Dampfturbine zugeführte Dampfmassenstrom weitgehend konstant einstellbar.

In einer vorteilhaften Weiterentwicklung der Dampfkraftwerksanlage ist die Überströmleitung mit einer oder mehreren Anzapfleitungen verbunden. Dadurch wird der Speisewasservorwärmer mit einem Teil des überschüssigen Dampfes betrieben, während ein anderer Teil in die Turbine strömt und an der weiteren Expansion teilnimmt. Zur Regelung des Dampfmassenstroms zur Anzapfleitung ist ein Regelventil vorgesehen.

In einer besonderen Ausgestaltung der Dampfkraftwerksanlage ist der Prozessdampfverbraucher eine Abscheidevorrichtung für Kohlendioxid. Dabei verbindet die Prozessdampfleitung die Dampfleitung mit einem Wärmetauscher, der für die Beheizung einer Desorptionskolonne vorgesehen ist.

Weitere Vorteile der Dampfkraftwerksanlage ergeben sich in analoger Weise aus den entsprechenden Weiterbildungen des voranbeschriebenen Betriebsverfahrens zum Betrieb einer Dampfkraftwerksanlage.

Nachfolgend wir die Erfindung anhand von Ausführungsbeispielen erläutert. Es zeigt:
- FIG 1: ein Ausführungsbeispiel eines Betriebsverfahrens zum Betrieb einer Dampfkraftwerksanlage mit einem Prozessdampfverbraucher bei einem ersten Betriebszustand
- FIG 2: ein Ausführungsbeispiel eines Betriebsverfahrens zum Betrieb einer Dampfkraftwerksanlage mit einem Prozessdampfverbraucher bei einem zweiten Betriebszustand
- FIG 3: eine konventionelle Dampfkraftwerksanlage mit einem Prozessdampfverbraucher und Drosselvorrichtung
- FIG 4: ein Ausführungsbeispiel einer Dampfkraftwerksanlage mit einem Prozessdampfverbraucher und Bypassleitung
- FIG 5: ein Ausführungsbeispiel einer Dampfkraftwerksanlage mit einer Anzapfleitung.

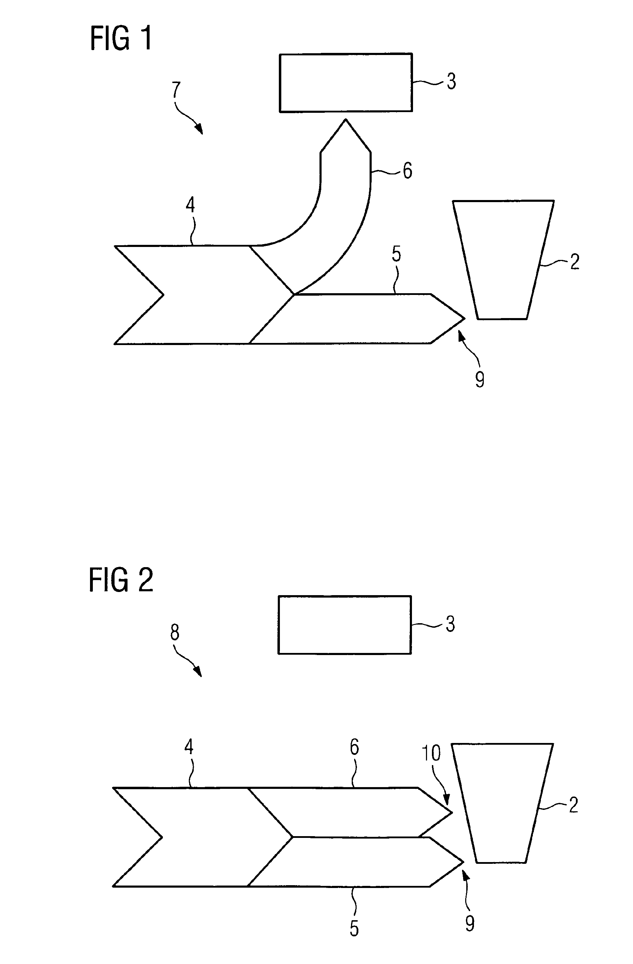

Fig 1 zeigt ein Ausführungsbeispiel eines Betriebsverfahrens zum Betrieb einer Dampfkraftwerksanlage mit einem Prozessdampfverbraucher bei einem ersten Betriebszustand 7. Zu sehen ist eine Prinzipskizze, in der ein Dampfmassenstrom 4, ein Prozessdampfverbraucher 3 und eine Dampfturbine 2 dargestellt ist. Der Dampfmassenstrom 4 teilt sich in einen ersten Teilmassenstrom 5 und einen zweiten Teilmassenstrom 6. Der erste Teilmassenstrom 5 wird dem Prozessdampfverbraucher 3 zugeführt. Der zweite Teilmassenstrom 6 der Dampfturbine 2 bei der ersten Turbinenstufe 9 zugeführt. Die Dampfturbine 2 ist dabei ausgelegt auf den zweiten Teilmassenstrom 6.

In FIG 2 wird das Betriebsverfahren zum Betrieb einer Dampfkraftwerksanlage mit einem Prozessdampfverbraucher bei einem zweiten Betriebszustand 8 gezeigt. Analog zu FIG 1 sind ein Dampfmassenstrom 4, ein Prozessdampfverbraucher 3 und eine Dampfturbine 2 dargestellt. Der Dampfmassenstrom 4 wird in einen ersten Teilmassenstrom 5 und einen zweiten Teilmassenstrom 6 aufgeteilt. Der zweite Teilmassenstrom 6 wird der Dampfturbine 2 bei der ersten Turbinenstufe 9 zugeführt. Der erste Teilmassenstrom 5 wird im zweiten Betriebszustand 8 der Dampfturbine 2 bei einer der ersten Turbinenstufe folgenden Turbinenstufe 10 zugeführt. Somit kann der erste Teilmassenstrom 5 weitgehend in der Dampfturbine 2 nutzbar gemacht werden.

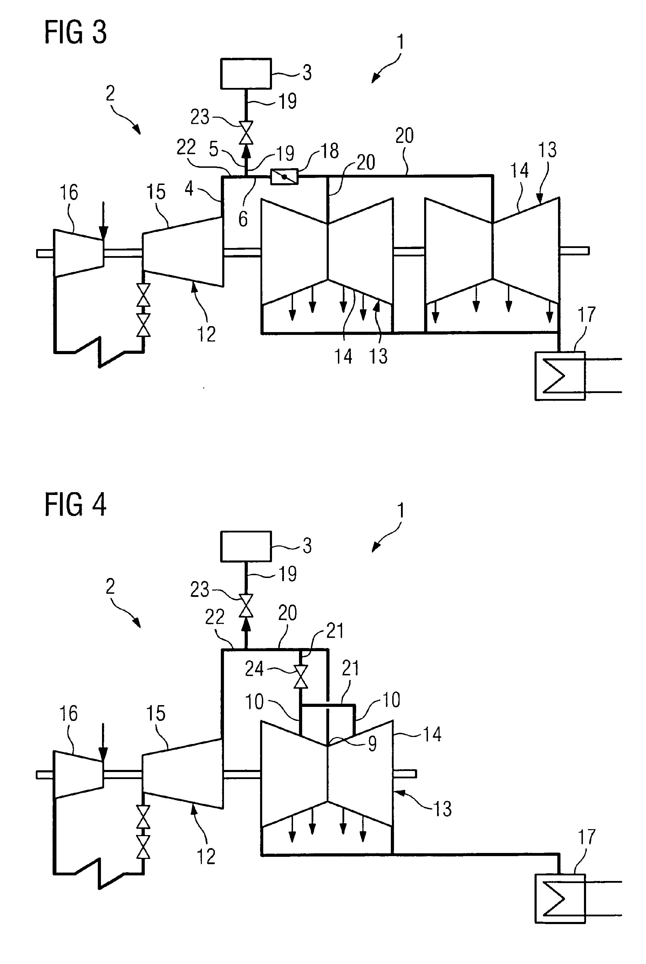

In FIG 3 ist eine konventionelle Dampfkraftwerksanlage mit einem Prozessdampfverbraucher dargestellt, wie sie aus dem Stand der Technik bekannt ist. Zu sehen ist eine Dampfturbine 2, die aus einer Hochdruckturbine 16, einer Mitteldruckturbine 15 und zwei Niederdruckturbinen 14 besteht, sowie ein Prozessdampfverbraucher 3 und ein Kondensator 17. An einem Auslass der Mitteldruckturbine 15 ist eine Dampfleitung 22 angeschlossen, die an einer Aufzweigung in eine Prozessdampfleitung 19 und eine Überströmleitung 20 aufzweigt. Die Prozessdampfleitung 19 ist verbunden mit einer Zuleitung des Prozessdampfverbrauchers 3. In die Prozessdampfleitung 19 ist ein Regelventil 23 geschaltet. Die Überströmleitung ist verbunden mit den Einlässen der Niederdruckturbinen 14. In die Überströmleitung ist eine Drosselklappe 18 geschaltet. Den Niederdruckturbinen 14 ist ein Kondensator 17 nachgeschaltet.

Im Betrieb der konventionellen Dampfkraftwerksanlage mit Prozessdampfverbraucher wird bei geöffnetem Regelventil 23 ein Dampfmassenstrom 4 in einen ersten Teilmassenstrom 5 und einen zweiten Teilmassenstrom 6 aufgeteilt. Um die Niederdruckturbinen 14 effizient betreiben zu können, ist eine Drosselung der Dampfturbinen 14 durch die Drosselklappe 18 erforderlich. Bei geschlossenem Regelventil 23 wird der Dampfmassenstrom 4 den Niederdruckturbinen 14 zugeführt. Dazu wird die Drosselklappe 18 geöffnet, so dass der Dampfmassenstrom 4 den Niederdruckturbinen weitgehend ungedrosselt zuführbar ist. Die Drosselung ist notwendig, da die Niederdruckturbinen 14 für den gesamten Dampfmassenstrom 4 auszulegen sind.

In FIG 4 ist ein Ausführungsbeispiel einer erfindungsgemäßen Dampfkraftwerksanlage 1 mit einem Prozessdampfverbraucher und Bypassleitung 21 dargestellt. Zu sehen ist eine Dampfturbine 2, die aus einer Hochdruckturbine 16, einer Mitteldruckturbine 15 und einer Niederdruckturbine 14 besteht, sowie ein Prozessdampfverbraucher 3 und ein Kondensator 17. Nicht dargestellt ist ein Ausführungsbeispiel mit zwei Niederdruckturbinen 14. Die Mitteldruckturbine 15 ist für eine erste Druckstufe 12 ausgelegt und die Niederdruckturbine 14 für eine zweite Druckstufe 13. An einem Auslass der Mitteldruckturbine 15 ist eine Dampfleitung 22 angeschlossen, die an einer Aufzweigung in eine Prozessdampfleitung 19 und eine Überströmleitung 20 aufzweigt. Die Prozessdampfleitung 19 ist verbunden mit einer Zuleitung des Prozessdampfverbrauchers 3. In die Prozessdampfleitung 19 ist ein Regelventil 23 geschaltet. Die Überströmleitung 20 ist verbunden mit dem Einlass der Niederdruckturbine 14 bei der ersten Turbinenstufe 9. Von der Überströmleitung 20 zweigt eine Bypassleitung 21 ab, die mit der Niederdruckturbine 14 bei einer der ersten Turbinenstufe folgenden Turbinenstufe 10 verbunden ist. In die Bypassleitung 21 ist ein Regelventil 24 geschaltet. Der Niederdruckturbine nachgeschaltet ist ein Kondensator 17.

Im Betrieb der erfindungsgemäßen Dampfkraftwerksanlage 1 wird bei geöffnetem Regelventil 23 ein Dampfmassenstrom 4 in einen ersten Teilmassenstrom 5 und einen zweiten Teilmassenstrom 6 aufgeteilt. Der erste Teilmassenstrom 5 wird als Prozessdampf über die Prozessdampfleitung 19 eine Prozessdampfverbraucher 3 zugeführt. Der zweite Teilmassenstrom 6 wird über die Überströmleitung 20 der Dampfturbine beider ersten Turbinenstufe zugeführt. Der bei der ersten Turbinenstufe 9 einbringbare Dampfmassenstrom ist an den zweiten Teilmassenstrom 6 angepasst. Bei gedrosseltem oder geschlossenem Regelventil 23 wird dem Prozessdampfverbraucher 3 ein reduzierter oder kein zweiter Teilmassenstrom 6 zugeführt. Der dem Prozessdampfverbraucher 3 nicht zustellbare Dampfmassenstrom fällt nun als Überschussdampf an, der den Druck des Dampfmassenstroms vor der Niederdruckturbine 14 erhöhen würde. Da die Niederdruckturbine 14 für einen Betrieb ohne Überschussdampf ausgelegt ist, müsste dieser Überschussdampf in den Kondensator 17 abgeleitet werden. Um den Druck des Dampfmassenstroms nahezu konstant zu halten wird das Regelventil 24 geöffnet, wodurch ein Teil des Dampfmassenstroms der Niederdruckturbine 14 bei einer der ersten Turbinenstufe folgenden Turbinenstufe 10 zuführbar ist.

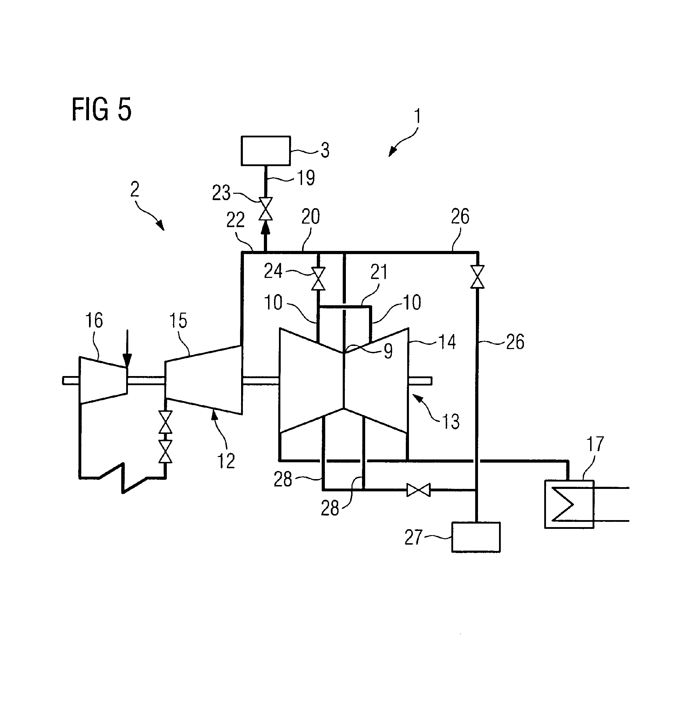

FIG 5 zeigt ein Ausführungsbeispiel einer Dampfkraftwerksanlage 1. Die Dampfkraftwerksanlage 1 ist nahezu analog ausgeführt wie FIG 4. Zusätzlich sind jedoch zwei Niederdruckturbinen 14, bzw. zwei zweite Druckstufen 13 vorgesehen. Somit sind auch zwei Bypassleitungen 21 vorhanden. Außerdem ist die Überströmleitung 20 zusätzlich mit den Anzapfleitungen 28 verbunden. Dadurch kann im Betrieb der Dampfkraftwerksanlage 1 ein an die Anzapfleitung 21 angeschlossener Speisewasservorwärmer 27 mit einem Teil des überschüssigen Dampfes betrieben, während ein anderer Teil des überschüssigen Dampfes in die Niederdruckturbine 14 strömt und an der weiteren Expansion teilnimmt.

Mit der Erfindung ist ein Betrieb einer Dampfkraftwerksanlage mit wenigstens einer Dampfturbine und einem Prozessdampfverbraucher in allen Betriebszuständen mit hoher Effizienz möglich. Durch die schaltungstechnische Verbesserung ist zudem eine wesentliche Wirkungsgradverbesserung gegenüber einer herkömmlichen Dampfkraftwerksanlage mit Prozessdampfverbraucher erzielbar. Die Wirkungsgraderhöhung wird erreicht durch die Verwertung des Überschussdampfes in der Dampfturbine bei einer der ersten Turbinenstufe folgenden Turbinenstufe. Da auf eine Drosselklappe verzichtet werden kann, entstehen keine Verluste durch Drosslung des Dampfmassenstroms.

## Patentansprüche

1. Verfahren zum Betreiben einer Dampfkraftwerksanlage 1 mit wenigstens einer Dampfturbine 2 und einem Prozessdampfverbraucher 3, bei dem ein Dampfmassenstrom 4 in einen ersten Teilmassenstrom 5 und einen zweiten Teilmassenstrom 6 aufgeteilt wird, wobei in einem ersten Betriebszustand 7 der erste Teilmassenstrom 5 der Dampfturbine 2 und der zweite Teilmassenstrom 6 dem Prozessdampfverbraucher 3 zugeführt wird, und wobei in einem zweiten Betriebszustand 8 zumindest ein Teil des zweiten Teilmassenstroms 6 der Dampfturbine 2 nach wenigstens der ersten Turbinenstufe 9 zugeführt wird.

2. Verfahren nach Anspruch 1, bei dem in dem zweiten Betriebszustand 8 von dem zweiten Teilmassenstrom 6 ein Teil der Dampfturbine 2 und ein anderer Teil einer Anzapfstelle der Dampfturbine 2 zugeführt wird.

3. Verfahren nach Anspruch 1, bei dem der zweite Teilmassenstrom 6 der Dampfturbine 2 nach wenigstens der ersten Turbinenstufe 9 zugeführt wird.

4. Verfahren nach Anspruch 1 oder 3, bei dem der zweite Teilmassenstrom 6 der Dampfturbine 2 bei mehreren Turbinenstufen zugeführt wird.

5. Verfahren nach einem der Ansprüche 1 bis 4, bei dem der Dampfturbine eine weitere Dampfturbine vorgeschaltet wird, wobei die weitere Dampfturbine bei einer ersten Druckstufe 12 betrieben wird und die Dampfturbine bei einer zweiten Druckstufe 13 betrieben wird, und wobei die erste Druckstufe 12 höher eingestellt wird als die zweite Druckstufe 13.

6. Verfahren nach einem der Ansprüche 1 bis 5, bei dem die Dampfturbine mit der zweiten Druckstufe 13 als Niederdruckturbine 14 betrieben wird.

7. Verfahren nach einem der Ansprüche 1 bis 6, bei dem der zweite Teilmassenstrom 6 der Dampfturbine 2 bei einer Turbinenstufe 10 zugeführt wird, wobei ein gewünschtes Verhältnis zwischen zustellbarem Dampfmassenstrom und Leistungssteigerung der Dampfturbine 2 berücksichtigt wird.

8. Verfahren nach einem der Ansprüche 1 bis 7, bei dem das Verhältnis der Aufteilung des Dampfmassenstroms 4 in den ersten Teilmassenstrom 5 und den zweiten Teilmassenstrom 6 in Abhängigkeit des Betriebszustands geregelt wird.

9. Verfahren nach einem der Ansprüche 1 bis 8, bei dem der erste Teilmassenstrom 5 in beiden Betriebszuständen 7, 8 im Wesentlichen konstant gehalten wird.

10. Verfahren nach einem der Ansprüche 1 bis 9, wobei im ersten Betriebszustand 7 der zweite Teilmassenstrom 6 zur Unterstützung eines Absorptionsprozesses von Kohlendioxid aus einem Rauchgas verwendet wird.

11. Dampfkraftwerksanlage 1 mit einer Dampfturbine 2 und einem Prozessdampfverbraucher 3, wobei die Dampfturbine 2 eine erste Druckstufe 12 und eine zweiten Druckstufe 13 aufweist, wobei eine Dampfleitung 22 , die mit der ersten Druckstufe 12 verbunden ist, in eine Prozessdampfleitung 19 und eine Überströmleitung 20 aufzweigt, und dass die Prozessdampfleitung 19 mit dem Prozessdampfverbraucher 3 verbunden ist und die Überströmleitung 20 mit der zweiten Druckstufe 13 verbunden ist, **dadurch gekennzeichnet, dass** eine Bypassleitung 21 vorgesehen ist, welche die Überströmleitung 20 mit der zweiten Druckstufe 13 nach wenigstens der ersten Turbinenstufe 9 verbindet, so dass Dampf an wenigstens der ersten Turbinenstufe 9 der zweiten Druckstufe 13 vorbeiführbar ist.

12. Dampfkraftwerksanlage 1 nach Anspruch 11, **dadurch gekennzeichnet, dass** mehrere Bypassleitungen 21 vorgesehen sind, welche die Überströmleitung 20 mit der zweiten Druckstufe 13 nach wenigstens der ersten Turbinenstufe 9 mit unterschiedlichen Turbinenstufen verbinden, so dass Dampf an wenigstens der ersten Turbinenstufe 9 vorbeifürbar ist und an mehreren Turbinenstufen einleitbar ist.

13. Dampfkraftwerksanlage 1 nach Anspruch 11 oder 12, **dadurch gekennzeichnet, dass** die zweite Druckstufe 13 für einen niedrigeren Druck ausgelegt ist, als die erste Druckstufe 12.

14. Dampfkraftwerksanlage 1 nach einem der Ansprüche 11 bis 13, **dadurch gekennzeichnet, dass** die zweite Druckstufe 13 eine Dampfturbine für Niederdruck 14 ist.

15. Dampfkraftwerksanlage 1 nach einem der Ansprüche 11 bis 14, **dadurch gekennzeichnet, dass** in die Prozessdampfleitung 19 ein Regelventil 23 geschaltet ist, so dass in Abhängigkeit vom Betriebsfall des Prozessdampfverbrauchers 3 die Menge eines zugeführten Dampfmassenstroms regelbar ist, wobei der nicht zugeführte Dampfmassenstrom als Überschussdampf anfällt.

16. Dampfkraftwerksanlage 1 nach einem der Ansprüche 11 bis 15, **dadurch gekennzeichnet, dass** in die Bypassleitung 21 ein Regelventil 24 geschaltet ist, so dass in Abhängigkeit vom Betriebsfall des Prozessdampfverbrauchers 3 ein Überschussdampf in die zweite Druckstufe 13 nach wenigstens der ersten Turbinenstufe 9 geregelt einleitbar ist, so dass der der ersten Turbinenstufe 9 der Dampfturbine 2 zugeführte Dampfmassenstrom weitgehend konstant einstellbar ist.

17. Dampfkraftwerksanlage 1 nach einem der Ansprüche 11 bis 16, **dadurch gekennzeichnet, dass** die Überströmleitung 20 mit einer Anzapfleitung 28 verbunden ist, so dass im Betrieb der Dampfkraftwerksanlage 1 ein an die Anzapfleitung 28 angeschlossener Speisewasservorwärmer 27 mit Dampf aus der Überströmleitung 20 betreibbar ist.

18. Dampfkraftwerksanlage 1 nach einem der Ansprüche 11 bis 17, **dadurch gekennzeichnet, dass** der Prozessdampfverbraucher 3 eine Abscheidevorrichtung für Kohlendioxid ist.
